(19)

**Europäisches Patentamt**

**European Patent Office**

**Office européen des brevets**

(11) **EP 4 668 556 A1**

(12) **EUROPEAN PATENT APPLICATION**

(43) Date of publication:
**24.12.2025 Bulletin 2025/52**

(21) Application number: **24182538.9**

(22) Date of filing: **17.06.2024**

(51) International Patent Classification (IPC):
$H02M\ 1/00$ (2006.01) $\quad H02M\ 1/10$ (2006.01)
$H02M\ 3/158$ (2006.01) $\quad H02M\ 3/335$ (2006.01)
$H02M\ 5/458$ (2006.01) $\quad H02M\ 7/48$ (2007.01)

(52) Cooperative Patent Classification (CPC):
**H02M 1/0058; H02M 1/0064; H02M 1/0095;
H02M 1/10; H02M 3/158; H02M 3/33573;
H02M 3/33584; H02M 5/4585; H02M 7/4807;
H02M 7/4815**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Constructions Electroniques +
Télécommunications,
en abrégé C.E.+T.
4020 Wandre (BE)**

(72) Inventors:
• **FREBEL, Fabrice
4020 Wandre (BE)**
• **GILLET, Walter
1050 Brussels (BE)**
• **VANOVERSCHELDE, Christian
4460 Horion-Hozemont (BE)**
• **BIDAINE, Benoit
4671 Saive (BE)**

(74) Representative: **AWA Benelux
Parc d'affaires Zénobe Gramme - Bât. K
Square des Conduites d'Eau 1-2
4020 Liège (BE)**

(54) **POWER EXTENDED MODE FOR AN AC-LINK POWER CONVERTER**

(57) The present invention relates to a method for extending power transfer in a power conversion circuit, characterised in that, inside a resonating mode (2, 6), between two conducting modes in which power is transferred by successively connecting the link reactance (120, 121) to a first port having in absolute value a higher voltage difference with the common phase to a second port having a lower voltage difference with the common phase, the link reactance (120, 121) is directly connected to the first port and to the second port (DC2, DC3), without any intermediary connection with the common mode (COM), inserting thereby in the power conversion circuit operation an additional mode (2a, 6a) within the resonating mode (2, 6), said connection intervening at the time the voltage across the link reactance (120, 121) is exactly equal to the difference of first port and second port voltages respectively referred to the common phase.

FIG. 1

FIG. 4

**Description**

**Field of the Invention**

The present invention relates to improvements brought to operation of a power converter provided with the topology of a universal power converter described in patents such as EP2025051B1 or EP2874297B1, . The different modes of operation of this topology are also explained in scientific literature, namely in Balakrishnan A., et al., "Soft Switched AC Link Buck Boost Converter", 2008, IEEE, pp. 1334-1339.

**Background and Prior Art**

The soft switching high frequency link converter topology for medium and high power AC-AC and AC-DC applications proposed in Balakrishnan A. et al. (see above) overcomes the shortcomings of conventional DC and AC link schemes and uses 12 bidirectional switches for a 3-phase to 3-phase configuration. An inductor-capacitor pair with low reactive rating forms a so-called reactance link. Switches turn on near to zero voltage and their turnoffs are capacitance buffered, resulting in low switching losses. Phase currents are synthesized using precisely controlled current pulses, which also allows for any desired input or output voltage or power factor. The converter can perform buck and boost operations in forward and reverse directions.

The applicant has brought on the market such a multiport power converter with 3 bidirectional ports (AC/DC/DC) to easily interconnect power sources (grid, PV energy generating systems and batteries) and loads (AC or DC). Using a single multiport converter offers much easier systems integration, control and ongoing maintenance by simplifying system level hardware and software design.

Battery life can be extended through galvanic isolation, providing protection against grid disturbances, and built-in smart algorithms to minimize battery stress.

A wide DC voltage range allows the use of multiple storage technologies such as lead-acid, lithium-ion, super-caps, aqueous batteries, flow batteries or flywheels. The galvanic isolation also maximizes PV production over the long-term, by reducing PID (Potential-Induced Degradation).

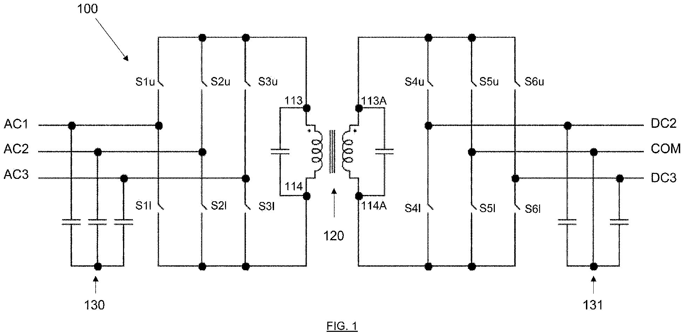

FIG. 1 represents a power converter example showing the full-bridge buck-boost converter in a 3-phase AC port (AC1, AC2, AC3) and 2 ports DC with a common topology with bidirectional switches (DC2+, DC3+, COM).

Referring to FIG. 1, the power converter 100 comprises a first set of electronic switches S1u, S2u, S3u, and S4u, S5u and S6u respectively which are connected between a first port 113, 113A of link inductor 120 and each phase AC1, AC2, AC3 of the AC portal and each phase DC2+, DC3+ and COM(MON) of the DC portal respectively. The converter also comprises a second set of electronic switches S1l, S2l, S3l, and S4l, S5l and S6l respectively that are connected between a second port 114, 114A of link inductor 120 and each phase AC1, AC2, AC3 of the AC portal and each phase DC2+, DC3+ and COM(MON) of the DC portal respectively. It is to be noted that in this case a simple link inductor 120 has been replaced by an equivalent transformer having the same function but which is galvanically isolated.

A link capacitor 121, 121 A is connected in parallel with the link inductor 120, forming the so-called link reactance. Each of the above switches is capable of conducting current and blocking current in both directions, and may be for example composed of bi-directional IGBTs, which are as such well-known of the one skilled in the art.

The converter 100 also generally comprises AC portal and DC portal capacitor filters 130 and 131, respectively, which will smooth the current pulses produced by switching current into and out of inductor 120. AC portal filter capacitors are placed between the AC phases and DC portal filter capacitors are similarly placed between the DC phases. DC filter capacitors are preferably attached in a grounded configuration as shown.

In the published classical version of the converter, each link cycle is divided into 16 modes, among them 8 power transfer modes and 8 partial resonant modes taking place alternatively. There are three basic operations taking place through the 16 modes : energizing, (partial) resonance and deenergizing. Modes 2, 4, 6, 8, 10, 12, 14 and 16 are the (partial) resonant modes, and they constitute each only a small fraction of the link cycle time.

Again in the classical operation, the link is energized from the inputs during modes 1, 3, 9 and 11 and is de-energized to the outputs during modes 5, 7, 13 and 15. The various operating modes are explained below, and typical waveforms are also shown in the corresponding figures. The different modes are well described and explained in the above-mentioned documents.

Supposing that the converter is operating in DC mode, with 2 positive ports DC2 and DC3 typically defined as shown in FIG. 1. When energy has to be transferred to or from port DC2, the link connects to port DC2, and when energy has to bet transferred to or from port DC3, the link connects to port DC3.

Because the converter operates in a packet mode, the energy packets are transferred when the link is connected to the corresponding port. The power transfer, or energy transfer rate, is defined by the product of each energy packet by the switching frequency. Because the switching frequency is the inverse of the sum of the time spent on all ports, maximizing the power transfer automatically requires to minimize the time spent on all ports, and further to increase the switching frequency.

However, each energy packet transferred to the link is also related to current change in the link. The current is changed in the link according to the well-known inductor law :

$$u(t) = L\frac{di(t)}{dt}$$

or

$$\Delta i = u\frac{\Delta t}{L}$$

We see that to maximize $\Delta i$, we have to maximize the applied voltage (u) and the time spend during which the link is connected to the port ($\Delta t$), which is of course contradictory with the above statement. That is the reason why ports with the highest voltage should also be used during conversion.

### Description of an Embodiment of prior Art

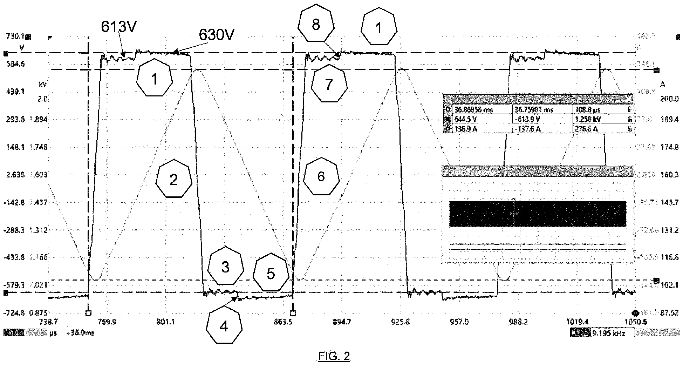

FIG. 2 shows at least one switching period of the converter according to FIG. 1 operated as described in an embodiment of prior art.

In the example below, measurements were taken during a transfer of 15 kW from DC3 port (630 Vdc) to DC2 port (613 Vdc).

In mode 1, departing from I=0 in the link, the link is connected to the input voltage pair having the highest voltage, for example here via DC ports DC3+, COM via switches S6u and S5l, which *energizes* the link in the positive direction (V>0, I>0). The link charges linearly till the current meets the desired value, i. e. the current value calculated according to the power to be transferred. At this time, all the switches are turned off.

In mode 2, the link resonates. The link capacitor is discharging and the voltage decreases and reverses (becomes negative) while the current still tends to maintain itself (V<0, I>0). The voltage is allowed to decrease till it becomes equal (in absolute value) to the voltage across the other phase pair, i.e. DC2+, COM. Note as a general comment that, when the link voltage is negative, the equality in absolute value is to be taken in consideration.

In mode 3, switches S4l and S5u are closed, and the link is connected to DC2+. The current flows from DC2+ to the link (as I>0 and V<0, power is *extracted* from the link).

In mode 4, all the switches are turned off and a short resonance occurs (see small step in the curve of FIG. 2) before mode 5 when it is decided to reconnect the link to DC3+ via switches S6l and S5u . The current and the voltage across the inductance are both negative (V<0, I<0), which means that power is *injected* in the link.

In mode 6, all the switches are disconnected and the link resonates. Power changes its sign when V increases and then becomes positive (V>0, I<0).

In mode 7, when V becomes equal to the voltage across the phase pair DC2+, COM, this phase pair is reconnected to the link via switches S5l and S4u. Power is *extracted* from the link (V.I<0).

When enough energy has been extracted from the link, the switches are disconnected again during a short resonance occurring in mode 8 and then reconnected to the pair DC3+, COM to *charge* the link, and the cycle start again.

Power transfer can also be done from the left side (AC ports) to the right side (DC ports) of the circuit of FIG. 1. As the transfer times are very short (typically 10ths of microseconds), the AC voltages and currents behave themselves as DC voltages and currents. The principle is that one goes always from the highest voltage to the lowest voltage for reconnection and charging the link and from the lowest voltage to the highest voltage for reconnection and discharging the link. Power can be exchanged by seamlessly shifting from any mode to anyone else. One can take for example 20kW from the AC port and 20kW from a DC port and then reinject the whole power (40kW) to the other DC port (e.g. in case PV + grid -> battery).

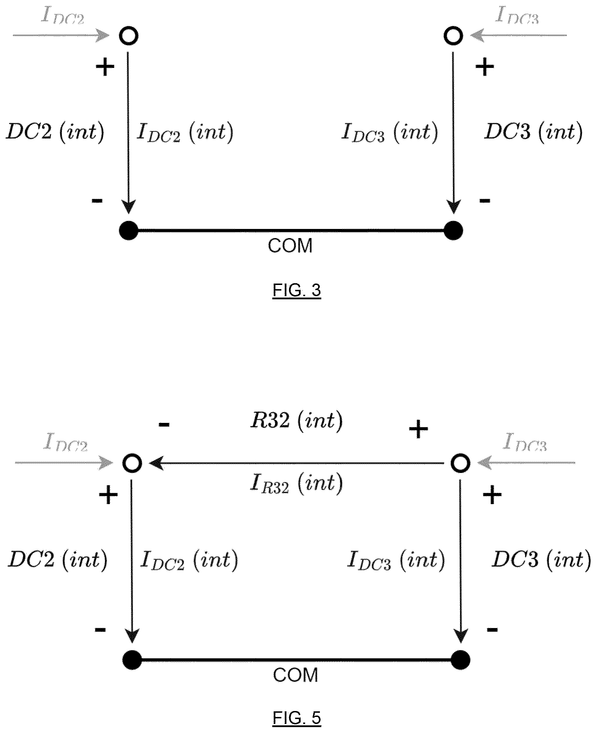

According to the sign convention of FIG. 3, current in DC2 port $I_{DC2}$ is for the above example :

$$I_{DC2} = I_{DC2}(int) = -15 \text{ kW/613 V} = -24.5 \text{ A,}$$

and current in DC3 port is

$$I_{DC3} = I_{DC3}(int) = 15 \text{ kW/630 V} = 23.8 \text{ A.}$$

## Aims of the Invention

The present invention aims to propose, in the above-mentioned AC-link power converter, a mean for increasing power transfer from one port to another port without affecting power transfer on other ports.

Another aim of the invention is to maximize energy transfer provided by the power converter, while minimizing the stresses withstood by the converter.

## Summary of the Invention

A first aspect of the present invention relates to a method for extending power transfer in a power conversion circuit, said power conversion circuit comprising :

a first stage, a link reactance comprising a parallel combination of an inductor and at least a capacitor, and at least a second stage;

wherein the first stage comprises a bridge switch array comprising bidirectional switching devices which are jointly connected to operatively connect at least one terminal of the link reactance to a first power input/output multiport with reversible polarity of connection, and

wherein the second stage comprises a bridge switch array comprising bidirectional switching devices which are jointly connected to operatively connect at least one other terminal of the link reactance to a second power input/output multiport, with reversible polarity of connection;

wherein each of said multiports have at least two phases defined with respect to a common phase, said common phase being at least dynamic ;

wherein the power conversion circuit is configured to repeatedly, at various times, drive current into said link reactance using said bidirectional switching devices, and immediately after each drive of current, to temporarily disconnect said link reactance from said first and second multiports respectively, to thereby resonantly transfer a quantity of energy from said inductor to said capacitor;

wherein said power conversion circuit is configured to use the bidirectional switching devices of the first stage and/or the second stage so that at least two power cycles, one for each direction of inductor current, occur during each inductor cycle, wherein each power cycle comprises at least two conduction modes, one in which the inductor is connected to a first power port of one multiport and one in which the inductor is connected to a second power port of the same multiport or of another multiport, and so that immediately after each conduction mode said link reactance is temporarily disconnected from said multiport(s) ;

characterised in that, inside a resonating mode, between two conducting modes in which power is transferred by successively connecting the link reactance to a first port having a voltage difference with the common phase to a second port having also voltage difference with the common phase with the same polarity as the first port, the link reactance is directly connected to the first port and to the second port, without any intermediary connection with the common mode,

inserting thereby in the power conversion circuit operation an additional mode within the resonating mode, said connection intervening at the time the voltage across the link reactance is exactly equal to the difference of first port and second port voltages respectively referred to the common phase.

According to preferred embodiments, the method further comprises one or more of the following features :

- the ports of each of the first or the second power input/output multiport are either AC ports or DC ports;
- said multiports eventually involved in the additional mode operation are either DC ports referred to a common phase or AC ports referred to a common phase that can be dynamic, provided the AC ports have the same voltage signs during a sequence of successive modes ;
- the time duration of the additional mode is reduced to 5 to 10% of the conversion circuit total transfer cycle duration ;
- bridge switch arrays used in the first and second stage are selected from the list of full-bridge or half-bridge rectifiers, full-bridge or half-bridge inverters and three-phase AC bridge converters ;
- each of said multiports can be indifferently used as power input or as power output thanks to the bidirectionality of the switching devices.

A second aspect of the present invention relates to a power conversion circuit suitable for extending power transfer therein, said power conversion circuit comprising :

a first stage, a link reactance comprising a parallel combination of an inductor and at least a capacitor, and at least a second stage;

wherein the first stage comprises a bridge switch array comprising bidirectional switching devices which are jointly connected to operatively connect at least one terminal of the link reactance to a first power input/output multiport, with reversible polarity of connection, and

wherein the second stage comprises a bridge switch array comprising bidirectional switching devices which are jointly connected to operatively connect

at least one other terminal of the link reactance to a second power input/output multiport, with reversible polarity of connection;

wherein each of said multiports have at least two phases defined with respect to a common phase, said common phase being at least dynamic ;

wherein the power conversion circuit is configured to repeatedly, at various times, drive current into said link reactance using said bidirectional switching devices, and immediately after each drive of current, to temporarily disconnect said link reactance from said first and second multiports respectively, to thereby resonantly transfer a quantity of energy from said inductor to said capacitor;

wherein said power conversion circuit is configured to use the bidirectional switching devices of the first stage and/or the second stage so that at least two power cycles, one for each direction of inductor current, occur during each inductor cycle, wherein each power cycle comprises at least two conduction modes, one in which the inductor is connected to a first power port of one multiport and one in which the inductor is connected to a second power port of the same multiport or of another multiport, and so that immediately after each conduction mode said link reactance is temporarily disconnected from said multiport(s) ;

characterised in that the power conversion circuit is configured to connect, inside a resonating mode, between two conducting modes in which power is transferred by successively connecting the link reactance to a first port having a voltage difference with the common phase to a second port having a voltage difference with the common phase with the same polarity as the first port, the link reactance directly to a first port and to a second port, without any intermediary connection with the common mode, inserting thereby an additional mode within the resonating mode, said connection intervening at the time the voltage across the link reactance is exactly equal to the difference of first port and second port voltages respectively referred to the common phase.

Preferably, in the power conversion circuit above, said inductor is implemented by a transformer in order to provide galvanic insolation between devices interconnected to the power conversion circuit.

A third aspect of the present invention relates to a method for extending power transfer in a power conversion circuit, said power conversion circuit comprising a link reactance comprising a parallel combination of an inductor and at least a capacitor;

wherein the power conversion circuit comprises a bridge switch array comprising bidirectional switching devices which are jointly connected to operatively connect at least one terminal of the link reactance to a power input/output multiport, with reversible polarity of connection, and

wherein said multiport has at least two phases defined with respect to a common phase, said common phase being at least dynamic ;

wherein the power conversion circuit is configured to repeatedly, at various times, drive current into said link reactance using said bidirectional switching devices, and immediately after each drive of current, to temporarily disconnect said link reactance from said multiport, to thereby resonantly transfer a quantity of energy from said inductor to said capacitor;

wherein said power conversion circuit is configured to use the bidirectional switching devices so that at least two power cycles, one for each direction of inductor current, occur during each inductor cycle, wherein each power cycle comprises at least two conduction modes, one in which the inductor is connected to a first power port of the multiport and one in which the inductor is connected to a second power port of the multiport, and so that immediately after each conduction mode said link reactance is temporarily disconnected from the multiport;

characterised in that, inside a resonating mode, between two conducting modes in which power is transferred by successively connecting the link reactance to a first port having a voltage difference with the common phase to a second port having another voltage difference with the common phase with the same polarity as the first port, the link reactance is directly connected to the first port and to the second port, without any intermediary connection with the common mode, inserting thereby in the power conversion circuit operation an additional mode within the resonating mode, said connection intervening at the time the voltage across the link reactance is exactly equal to the difference of first port and second port voltages respectively referred to the common phase.

It is therefore within the spirit of the invention that the circuit of FIG. 1 be used with an operational first stage with a first multiport and with an operational second stage with a second multiport, the ports of the first multiport and of the second multiport being AC ports on both sides, DC ports on both sides or AC ports on the first side and DC ports on the second side.

It is also within the spirit of the invention that, in the circuit of FIG. 1, only the ports on one multiport, thus on only one side, be used for exchanging energy according to the present disclosure, while the ports on the other multiport are not used.

Finally it is still within the spirit of the invention to operate a circuit with only one stage and only one multiport, the inductor being in this case not embodied as a transformer.

## Brief Description of the Drawings

FIG. 1 diagrammatically shows a full-bridge reactance link multiport AC/DC converter topology with bidirectional switches according to prior art.

FIG. 2 shows inductor current and voltage waveforms in case the above power converter is driven as in prior art.

FIG. 3 schematically shows the currents flowing into or out of the 2-DC ports through the common port according to prior art.

FIG. 4 shows inductor current and voltage waveforms in case the power converter is driven with an extended power mode as in the present invention.

FIG. 5 schematically shows the currents flowing into or out of the 2-DC ports and the virtual port according to the present invention.

## Description of a Preferred Embodiment of the Invention

The principle at the basis of the invention is now to consider an additional "virtual" port formed when one connects the link directly between two ports, for example, DC2 and DC3, without considering COM as intermediate connection. This "virtual" port is named R32 according to FIG. 5.

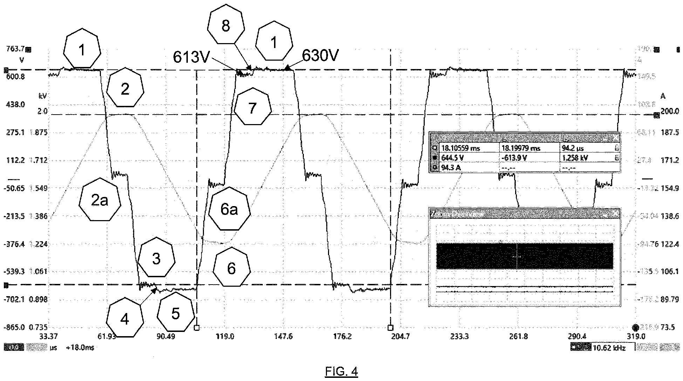

FIG. 4 shows at least one switching period of the converter operated as described in an embodiment of the present invention.

As here above, in mode 1, the link is connected to the input voltage pair having the highest voltage, for example via DC ports DC3+, COM via switches S6u and S5l, which *energizes* the link in the positive direction (V>0, I>0). The link charges linearly till the current meets the desired value, i.e. the current value calculated according to the power to be transferred, and then all the switches are turned off.

In mode 2, the link resonates. The link capacitor is discharging and the voltage decreases and reverses (becomes negative) while the current still tends to maintain itself (V<0, I>0).

However, in the case of the invention, the voltage is allowed to decrease only till it becomes equal to the voltage difference between DC3 port (630Vdc in the example) and DC2 port (613Vdc in the example), i.e. 17Vdc.

In a new intermediate mode in comparison with prior art (mode 2a), DC3 is directly connected to DC2, without an intermediate connection to COM. In this case, switches S6u and S4l are closed. Power is transferred directly from port to port without big variation of voltage. The energy transfer rate is thus very low. At the end of short period mode 2a (typically $10\mu s$ or less), all the switches are turned off.

The voltage is further allowed to decrease till it becomes equal (in absolute value) to the voltage across the other phase pair, i.e. DC2+, COM (still mode 2).

In mode 3, switches S5u and S4l are closed, just as in the end of mode 2 of prior art as described above. The current is positive, going from DC2+ to the link (as V<0, and I>0, power is *extracted* from the link).

In mode 4, all the switches are turned off and a short resonance occurs (see small step in the curve of FIG. 4) before mode 5 when one connects the link to DC3+ via switches S6l and S5u . The current and the voltage across the inductance are both negative (V<0, I<0), which means that power is *injected* in the link.

In mode 6, all the switches are turned off and the link resonates. V increases till it becomes equal (in absolute value) to the voltage difference between DC3 port (630Vdc in the example) and DC2 port (613Vdc in the example), i.e. 17Vdc. One connects as above DC2 to DC3 when $V_L$ is -17Vdc via switches S6l and S4u. This intermediate mode, called mode 6a, is symmetric to mode 2a. When enough power is obtained at the end of short period mode 6a (typically $10\mu s$ or less), all the switches are turned off, the link resonates et V continues to increase and gets positive (V>0, I<0).

In mode 7, just as in prior art, when V becomes equal to the voltage across the phase pair DC2+, COM, this phase pair is reconnected to the link via switches S5l and S4u. Power is *extracted* from the link (V.I<0).

In mode 7, when enough energy has been extracted from the link, the switches are disconnected again during a short resonance (the small step in voltage depicts this resonance) occurring in mode 8 and then reconnected to the pair DC3+, COM to *charge* the link and the cycle start again.

Without departing from the spirit of the invention, intermediate commutation cycles (such as 2a, 6a modes) can be inserted via any port if needed. Therefore the software is provided with a list of ports which are sorted according to their entry voltage.

The principle of the invention is based on the observation that the external currents are not necessarily equal to the corresponding internal currents and are linked by the following relationships (see FIG. 5):

$$I_{DC2} = I_{DC2}(int) - I_{R32}(int)$$

$$I_{DC3} = I_{DC3}(int) + I_{R32}(int)$$

In the example, $I_{DC2}$ is negative and $I_{DC3}$ is positive, meaning that choosing a positive value for $I_{R32}(int)$ will decrease the absolute value for $I_{DC2}(int)$ and $I_{DC3}(int)$ yielding a reduction of the rms current in the link.

It can be proven that some optimal parameter can be extracted as follows:

$$\psi_a = \frac{V_b^2}{V_a^2 + V_b^2 + V_a V_b}$$

$$\psi_b = \frac{V_a^2}{V_a^2 + V_b^2 + V_a V_b}$$

$$\psi_i = \frac{V_a V_b}{V_a^2 + V_b^2 + V_a V_b}$$

$$\psi_a + \psi_i + \psi_b = 1$$

where Va is $V_{DC2}$ vs. COM and Vb is $V_{DC3}$ vs. COM (in first approximation, Va - Vb = $V_{DC2}$ - $V_{DC3}$); leading to the following currents:

$$I_{DC2}(int) = \psi_a I_{DC2}$$

$$I_{DC3}(int) = \psi_b I_{DC3}$$

$$I_{R32}(int) = I_{DC3} - I_{DC3}(int)$$

Applying this to the above example, we get a comparison between the two modes of operation, a classical mode (prior art) and a power extended mode (present invention):

```
Classical mode:
psia: 0.51
psib: 0.49
psii: 0.00
alphaa: 1.00
alphab: 1.00
IDC2(int): -24.47 A,  IDC2pk: 96.56 A
IDC3(int): 23.81 A,  IDC3pk: 96.56 A
IDC32(int): 0.00 A
Iavg: 48.28 A

Power Extended mode:
psia: 0.34
psib: 0.32
psii: 0.33
alphaa: 0.34
```

```
alphab: 0.32
IDC2(int): -8.38 A, IDC2pk: 48.94 A
IDC3(int): 7.72 A, IDC3pk: 47.62 A
IDC32(int): 16.09 A
Iavg: 32.19 A
```

(note that $\alpha_A$ and $\alpha_B$ are intermediary variables and psii is the psi between connections DC2 and DC3).

We note that the current stresses are highly reduced by using port R32 as an intermediate transfer port. However, in the example, the voltage across the R32 port is low (630V - 613V = 17V) and the energy transfer to the link is very slow (due to the low voltage, see above). However, despite that nearly no energy is transferred to the link, the current in R32 goes directly from external port DC3 to external port DC2.

Thanks to this direct transfer without invoking energy transfer to the link, the counter-intuitive result is that the power transfer phase is also shorter in this new mode of operation yielding to optimal power transfer. FIG.4 below shows the same power transfer than above using the present invention yielding a switching period of 94.2μs (compared to 108.8μs) and a peak current in the link (low stress) of 94.3A instead of 138.9A (higher stress).

## Claims

1. A method for extending power transfer in a power conversion circuit, said power conversion circuit comprising :

   a first stage, a link reactance comprising a parallel combination of an inductor (120) and at least a capacitor (121), and at least a second stage;
   wherein the first stage comprises a bridge switch array comprising bidirectional switching devices (S1u, S1l, S2u, S2l, S3u, S3l) which are jointly connected to operatively connect at least one terminal of the link reactance to a first power input/output multiport (AC1, AC2, AC3), with reversible polarity of connection, and
   wherein the second stage comprises a bridge switch array comprising bidirectional switching devices (S4u, S4l, S5u, S5l, S6u, S6l) which are jointly connected to operatively connect at least one other terminal of the link reactance to a second power input/output multiport (COM, DC2, DC3), with reversible polarity of connection;
   wherein each of said multiports (AC1, AC2, AC3 ; COM, DC2, DC3) have at least two phases defined with respect to a common phase, said common phase being at least dynamic ;
   wherein the power conversion circuit is configured to repeatedly, at various times, drive current into said link reactance (120, 121) using said bidirectional switching devices (S1u, S1l, S2u, S2l, S3u, S3l ; S4u, S4l, S5u, S5l, S6u, S6l), and immediately after each drive of current, to temporarily disconnect said link reactance (120, 121) from said first and second multiports respectively, to thereby resonantly transfer a quantity of energy from said inductor (120) to said capacitor (121);
   wherein said power conversion circuit is configured to use the bidirectional switching devices of the first stage and/or the second stage so that at least two power cycles, one for each direction of inductor current, occur during each inductor cycle, wherein each power cycle comprises at least two conduction modes, one in which the inductor (120) is connected to a first power port of one multiport and one in which the inductor (120) is connected to a second power port of the same multiport or of another multiport, and so that immediately after each conduction mode said link reactance (120, 121) is temporarily disconnected from said multiport(s) ;
   **characterised in that**, inside a resonating mode (2, 6), between two conducting modes in which power is transferred by successively connecting the link reactance (120, 121) to a first port having a voltage difference with the common phase to a second port having a voltage difference with the common phase with the same polarity than the first port, the link reactance (120, 121) is directly connected to the first port and to the second port (DC2, DC3), without any intermediary connection with the common mode (COM), inserting thereby in the power conversion circuit operation an additional mode (2a, 6a) within the resonating mode (2, 6), said connection intervening at the time the voltage across the link reactance (120, 121) is exactly equal to the difference of first port and second port voltages respectively referred to the common phase.

2. The method according to claim 1, wherein the ports of each of the first or the second power input/output multiport are either AC ports (AC1, AC2, AC3) or DC ports (COM, DC1, DC2).

3. The method according to claim 1, wherein said multiports eventually involved in the additional mode (2a, 6a) operation are either DC ports (DC2, DC3) referred to a common phase (COM) or AC ports (AC1, AC2, AC3) referred to a common phase that can be dynamic, provided the AC ports have the same voltage signs during a sequence of successive modes.

4. The method according to claim 1, wherein the time duration of the additional mode (2a, 6a) is reduced to 5 to 10% of the conversion circuit total transfer cycle duration.

5. The method according to claim 1, wherein bridge switch arrays used in the first and second stage are selected from the list of full-bridge or half-bridge rectifiers, full-bridge or half-bridge inverters and three-phase AC bridge converters.

6. The method according to claim 1, wherein each of said multiports can be indifferently used as power input or as power output thanks to the bidirectionality of the switching devices.

7. A power conversion circuit suitable for extending power transfer therein, said power conversion circuit comprising :

a first stage, a link reactance comprising a parallel combination of an inductor (120) and at least a capacitor (121), and at least a second stage;
wherein the first stage comprises a bridge switch array comprising bidirectional switching devices (S1u, S1l, S2u, S2l, S3u, S3l) which are jointly connected to operatively connect at least one terminal of the link reactance to a first power input/output multiport (AC1, AC2, AC3), with reversible polarity of connection, and
wherein the second stage comprises a bridge switch array comprising bidirectional switching devices (S4u, S4l, S5u, S5l, S6u, S6l) which are jointly connected to operatively connect at least one other terminal of the link reactance to a second power input/output multiport (COM, DC2, DC3), with reversible polarity of connection;
wherein each of said multiports (AC1, AC2, AC3 ; COM, DC2, DC3) have at least two phases defined with respect to a common phase, said common phase being at least dynamic ;
wherein the power conversion circuit is configured to repeatedly, at various times, drive current into said link reactance (120, 121) using said bidirectional switching devices (S1u, S1l, S2u, S2l, S3u, S3l ; S4u, S4l, S5u, S5l, S6u, S6l), and
immediately after each drive of current, to temporarily disconnect said link reactance (120, 121) from said first and second multiports respectively, to thereby resonantly transfer a quantity of energy from said inductor (120) to said capacitor (121);
wherein said power conversion circuit is configured to use the bidirectional switching devices of the first stage and/or the second stage so that at least two power cycles, one for each direction of inductor current, occur during each inductor cycle, wherein each power cycle comprises at least two conduction modes, one in which the inductor (120) is connected to a first power port of one multiport and one in which the inductor (120) is connected to a second power port of the same multiport or of another multiport, and so that immediately after each conduction mode said link reactance (120, 121) is temporarily disconnected from said multiport(s) ;
**characterised in that** the power conversion circuit is configured to connect, inside a resonating mode (2, 6), between two conducting modes in which power is transferred by successively connecting the link reactance (120, 121) to a first port having a voltage difference with the common phase to a second port having a voltage difference with the common phase with the same polarity as the first port, the link reactance (120, 121) directly to a first port and to a second port (D2, D3),
without any intermediary connection with the common mode (COM), inserting thereby an additional mode (2a, 6a) within the resonating mode (2, 6), said connection intervening at the time the voltage across the link reactance (120, 121) is exactly equal to the difference of first port and second port voltages referred respectively to the common phase.

8. The power conversion circuit suitable for extending power transfer therein according to claim 7, wherein said inductor (120) is implemented by a transformer in order to provide galvanic insolation between devices interconnected to the power conversion circuit.

9. A method for extending power transfer in a power conversion circuit, said power conversion circuit comprising a link reactance comprising a parallel combination of an inductor (120) and at least a capacitor (121);

wherein the power conversion circuit comprises a bridge switch array comprising bidirectional switching devices (S1u, S1l, S2u, S2l, S3u, S3l) which are jointly connected to operatively connect at least one terminal of the link reactance to a power input/output multiport (AC1, AC2, AC3; or COM, DC2, DC3), with reversible polarity of connection, and
wherein said multiport (AC1, AC2, AC3 ; or COM, DC2, DC3) has at least two phases defined with respect to a common phase, said common phase being at least dynamic ;
wherein the power conversion circuit is configured to repeatedly, at various times, drive current into said link reactance (120, 121) using said bidirectional switching devices (S1u, S1l, S2u, S2l, S3u, S3l), and immediately after each drive of current, to temporarily disconnect said link reactance (120, 121) from said multiport, to thereby resonantly transfer a quantity of energy from said inductor (120) to said capacitor (121);

wherein said power conversion circuit is configured to use the bidirectional switching devices so that at least two power cycles, one for each direction of inductor current, occur during each inductor cycle, wherein each power cycle comprises at least two conduction modes, one in which the inductor (120) is connected to a first power port of the multiport and one in which the inductor (120) is connected to a second power port of the multiport, and so that immediately after each conduction mode said link reactance (120, 121) is temporarily disconnected from the multiport;

**characterised in that**, inside a resonating mode (2, 6), between two conducting modes in which power is transferred by successively connecting the link reactance (120, 121) to a first port having a voltage difference with the common phase to a second port having another voltage difference with the common phase with the same polarity as the first port, the link reactance (120, 121) is directly connected to the first port and to the second port (DC2, DC3), without any intermediary connection with the common mode (COM), inserting thereby in the power conversion circuit operation an additional mode (2a, 6a) within the resonating mode (2, 6), said connection intervening at the time the voltage across the link reactance (120, 121) is exactly equal to the difference of first port and second port voltages respectively referred to the common phase.

FIG. 1

FIG. 2

$I_{DC2}$  ○  $I_{DC3}$  ○

+    +

$DC2\ (int)$  $I_{DC2}\ (int)$    $I_{DC3}\ (int)$  $DC3\ (int)$

-    -

●━━━━━━━━━━━━━━●
COM

FIG. 3

-  $R32\ (int)$  +

$I_{DC2}$  ○←━━━━━━━━━━━━━○  $I_{DC3}$

+    $I_{R32}\ (int)$    +

$DC2\ (int)$  $I_{DC2}\ (int)$    $I_{DC3}\ (int)$  $DC3\ (int)$

-    -

●━━━━━━━━━━━━━━●
COM

FIG. 5

FIG. 4

Europäisches
Patentamt

European
Patent Office

Office européen
des brevets

# EUROPEAN SEARCH REPORT

**Application Number**

**EP 24 18 2538**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Enjeti Prasad ET AL: "SOFT-SWITCHING HIGH-FREQUENCY AC-LINK UNIVERSAL POWER CONVERTERS WITH GALVANIC ISOLATION", DISSERTATION, 1 August 2013 (2013-08-01), XP055891016, Retrieved from the Internet: URL:https://oaktrust.library.tamu.edu/bits treams/alecd519-3dcf-43bf-898a-260b2826763 8/download [retrieved on 2022-02-14] * abstract * * page 2194, left-hand column, paragraph 3 - page 2195, right-hand column, paragraph 3; figures 5, 6a * | 1-9 | INV. H02M1/00 H02M1/10 H02M3/158 H02M3/335 H02M5/458 H02M7/48 |
| A | AMIRABADI MAHSHID ET AL: "Single-phase soft-switching AC-link buck-boost inverter", 2014 IEEE APPLIED POWER ELECTRONICS CONFERENCE AND EXPOSITION - APEC 2014, IEEE, 16 March 2014 (2014-03-16), pages 2192-2199, XP032589759, DOI: 10.1109/APEC.2014.6803609 [retrieved on 2014-04-21] * abstract; figures 23, 27, 29, 30(a) * * page 49, paragraph 3 * * pages 52-54, paragraph 2.8.1 * | 1-9 | TECHNICAL FIELDS SEARCHED (IPC) H02M |

The present search report has been drawn up for all claims

| Place of search | Date of completion of the search | Examiner |
|---|---|---|
| The Hague | 12 December 2024 | Van der Meer, Paul |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2025051 B1

- EP 2874297 B1

**Non-patent literature cited in the description**

- **BALAKRISHNAN A. et al.** Soft Switched AC Link Buck Boost Converter. IEEE, 2008, 1334-1339